Europäisches Patentamt

**(19)** European Patent Office

Office européen des brevets

**(11)** **EP 0 751 018 A1**

## (12) EUROPEAN PATENT APPLICATION

**(43)** Date of publication:
02.01.1997 Bulletin 1997/01

**(51)** Int. Cl.$^6$: **B60C 23/06**

**(21)** Application number: 96110134.2

**(22)** Date of filing: 24.06.1996

**(84)** Designated Contracting States:
**DE ES FR GB SE**

**(30)** Priority: 26.06.1995 IT TO950530

**(71)** Applicant: **FIAT AUTO S.p.A.**
**10135 Torino (IT)**

**(72)** Inventors:
• **Cisternino, Maurizio**
**10132 Torino (IT)**
• **Cascio, Fulvio**
**10146 Torino (IT)**

• **De Cristofaro, Francesco**
**10090 Bruino, (Torino) (IT)**
• **Bargis, Erica**
**10141 Torino (IT)**
• **Ponti, Cesare**
**10051 Avigliana, (Torino) (IT)**

**(74)** Representative: **Quinterno, Giuseppe et al**
**c/o JACOBACCI & PERANI S.p.A.**
**Corso Regio Parco, 27**
**10152 Torino (IT)**

**(54)** **A method and equipment for detecting the presence of a deflated tyre in a motor vehicle**

**(57)** The angular velocity ($\omega_i$) of each wheel is detected and corresponding velocity signals or data are generated and are processed in a processing unit (EPU) which is arranged to calculate the difference between the sum of the signals relating to two diagonally-opposed wheels (1, 4) and the sum of the signals relating to the other two wheels (2, 3). The unit (EPU) generates an alarm signal when the difference exceeds a reference value. Before the difference is calculated, the velocity signals ($\omega_i$) are modified according to predetermined calibration factors ($K_i$) which are specific to each wheel (1-4) and are updated and stored periodically.

EP 0 751 018 A1

## Description

The present invention relates to a method of detecting the presence of an at least partially deflated tyre in a motor vehicle with four wheels having respective tyres.

More specifically, the subject of the invention is a method comprising the steps of:

detecting the angular velocity of each wheel and generating corresponding velocity signals or data,

processing the velocity signals or data in a processing unit arranged to calculate the difference between the sum of the signals or data relating to one pair of diagonally-opposed wheels and the sum of the velocity signals or data relating to the other pair of wheels, and to generate an alarm signal indicative of the fact that a tyre is at least partially deflated when the difference exceeds a predetermined reference value.

Methods of this type are known, for example, from French patent application FR-A-2 568 519 and European patent EP-B1-0 291 217.

These known methods or processes are based upon the assumption that the radii of the vehicle wheels are substantially equal or that at least the wheels of the same axis have the same radius. In this case, when all of the tyres of the motor vehicle are correctly inflated, the difference between the sum of the angular velocities of the wheels of one diagonal and the sum of the angular velocities of the other wheels in theory is zero and in practice is anyway small.

If, however, one wheel has a deflated tyre, its effective rolling radius is reduced and its angular velocity increases so that the aforementioned difference has an increased value.

If the aforementioned difference is compared with a reference threshold, it is thus possible to establish whether one tyre of the motor vehicle may be deflated.

In practice, however, the radii of the wheels of a motor vehicle may differ appreciably, even when their tyres are inflated to an at least acceptable extent.

This may occur as a result of the dimensional variation of tyres of the same type and the same brand, of inevitable differences in inflation pressures, of differences in wear of the tyres and, sometimes, also as a result of the replacement of a tyre with another of a different brand and model.

With known methods, false alarm signals may thus be generated indicating the presence of a deflated tyre when in fact all of the tyres of the motor vehicle are, however, inflated to an at least acceptable extent.

The object of the present invention is to propose a method of detecting the presence of an at least partially deflated tyre which avoids the problems of the earlier methods or processes.

This object is achieved, according to the invention, by a method of the type specified above, characterized in that, before the difference is calculated, the velocity signals or data are modified according to predetermined calibration factors which are specific to each wheel and are updated and stored periodically,

the calibration factors being determined each time, in predetermined running conditions, by the detection of the angular velocity of each wheel, the calculation in the processing unit of the value of the average velocity of the four wheels of the motor vehicle, and the adoption, as the calibration factor for each wheel, of the ratio between the average velocity and the detected velocity of the wheel,

the difference then being calculated with the use of the velocity signals or data thus modified.

A further subject of the invention is equipment for detecting the presence of an at least partially deflated tyre by the implementation of the aforementioned method.

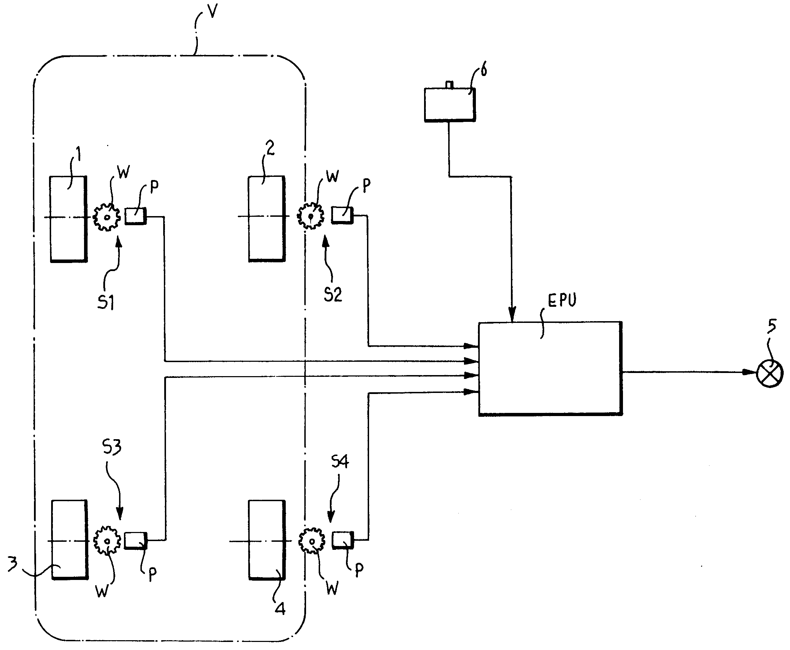

Further characteristics and advantages of the invention will become clear from the following detailed description given purely by way of non-limiting example, with reference to the appended drawing, which shows, in the form of a block diagram, a system operating according to the present invention.

In the appended drawing, a motor vehicle, indicated V, has four wheels 1, 2, 3, 4 with respective tyres. Respective sensors of the so-called phonic wheel type, indicated S1 to S4, are associated with these wheels.

In the embodiment illustrated, each sensor comprises essentially a toothed wheel W rotatable with the corresponding wheel and an associated magnetic pick-up P. The pick-ups P of the sensors S1 to S4 are connected to corresponding inputs of an electronic processing unit EPU.

The sensors S1-S4 are advantageously but not necessarily of the type currently used in anti-skid or so-called ABS systems. In a vehicle V provided with an anti-skid or ABS system of this type, the sensors S1-S4 may be the same sensors as are used for the anti-skid system and the processing unit EPU may be constituted by the same electronic unit which controls the anti-skid system. In this case the system of the invention is advantageously integrated with the anti-skid system of the motor vehicle.

In any case, the electronic control unit EPU is conveniently constituted by a microprocessor unit with associated memory devices and devices for interfacing with the sensors S1-S4.

A warning device 5, for example, an optical warning device, is also connected to the unit EPU and, advantageously, is disposed on the instrument panel of the motor vehicle.

The unit EPU is arranged to implement a procedure for monitoring the state of inflation of the tyres of the wheels 1 to 4 and a periodic calibration procedure.

For reasons of clarity, the calibration procedure will be described first.

The unit EPU is arranged to acquire, during a calibration stage, the angular velocities $\omega_1$, $\omega_2$ $\omega_3$, and $\omega_4$, of the four wheels whilst the motor vehicle V is in predetermined running conditions which will be described below.

On the basis of the angular velocities acquired, the unit EPU calculates the average angular velocity $\omega_{ave}$ (for example, the arithmetic mean) of these velocities. The unit EPU is then arranged to determine a specific calibration factor $K_i$ ($i = 1$ to 4) specific to each wheel as the ratio between the average angular velocity $\omega_{ave}$ and the detected velocity $\omega_i$ of the wheel i.

If the generic wheel i has a rolling radius smaller than the nominal radius envisaged for the wheels of the motor vehicle in question, its detected angular velocity $\omega_i$ is greater than the average angular velocity $\omega_{ave}$ and its calibration factor $K_i$ is accordingly less than 1.

The calibration factors $K_i$ are stored in the memory means associated with the unit EPU. The storage of these factors in fact concludes the calibration stage.

After a calibration stage, the unit EPU can carry out the procedure for monitoring the state of inflation of the tyres of the motor vehicle.

For this purpose, the unit EPU is arranged to acquire, during the monitoring procedure, the effective angular velocities $\omega_i$ of the individual wheels. With velocity sensors of the type illustrated in the drawing, the angular velocity of the wheel i can readily be derived on the basis of the following equation:

$$\omega_i = 2\,\pi\,n_i\,/\,Nt$$

in which N is the total number of teeth of a sensor wheel W, t is a time interval and $n_i$ is the number of teeth of the wheel W passing in front of the associated pick-up P in the time interval t.

The angular velocity $\omega_i$ of each wheel may be acquired on the basis of the equation given above either by the counting of the number $n_i$ of teeth "sensed" by the pick-up P in a time interval t of predetermined duration, or by the measurement of the time t needed for the pick-up P to "sense" all of the N teeth of the associated toothed wheel W.

The unit EPU is then arranged to modify or "correct" the effective angular velocities $\omega_i$ acquired on the basis of the calibration coefficients $K_i$ determined in the preceding calibration stage and thus by the calculation of angular velocities

$$\Omega_i = \omega_i\,K_i = 2\,\pi\,n_i\,K_i\,/\,N\,t$$

The unit EPU is then arranged to calculate the difference between the sum $\Omega_1 + \Omega_4$ of the velocities of the diagonally-opposed wheels 1 and 4 and the sum of the velocities $\Omega_2 + \Omega_3$ of the other two diagonally-opposed wheels 2 and 3.

The absolute difference value thus calculated is compared with a predetermined reference value. If the difference exceeds the reference value, the unit EPU activates the indicator device 5 to indicate the fact that a tyre of the motor vehicle V is at least partially deflated.

In this case, the unit EPU can also determine on which diagonal the at least partially deflated tyre is situated on the basis of the sign (positive or negative) of the difference calculated. The unit EPU may be arranged also to provide an indication of this diagonal, if desired.

The unit EPU may also advantageously be arranged to repeat the calibration operation described above cyclically at predetermined intervals in order to be able to use calibration factors which are as up to date as possible and which correspond best to the effective state of the tyres and hence to the effective rolling radii of the wheels during the subsequent monitoring stages of the state of inflation of the tyres.

In addition, or alternatively, the unit EPU may be arranged to carry out a calibration procedure upon request by the user of the motor vehicle, as a result, for example, of the operation by the user of a calibration control device such as that shown schematically in the drawing and indicated 6 therein.

In any case, for a reliable determination of the calibration factors associated with the individual wheels, the unit EPU is advantageously arranged to carry out the calibration procedure when the motor vehicle V is in certain running conditions, for example, whilst the vehicle is moving along an essentially straight path at a speed of advance within a predetermined range of values and whilst the absolute value of the average acceleration of the wheels is less than a predetermined value.

The existence of these conditions can be checked by the unit EPU by means of the signals obtained by the sensors S1-S4 or by further sensors of known type, not shown in the drawing.

The carrying-out of a calibration stage may also advantageously be conditional upon the braking system of the motor vehicle not being activated. This condition can also be detected by the unit EPU on the basis of the signals provided by the sensors S1-S4 or with the aid of a further sensor or detector associated with the braking system.

Naturally, the principle of the invention remaining the same, the forms of embodiment and details of construction may be varied widely with respect to those described and illustrated purely by way of non-limiting example, without thereby departing from the scope of the present invention.

## Claims

1. A method of detecting the presence of an at least partially deflated tyre in a motor vehicle with four wheels (1-4) having respective tyres, comprising the steps of:

detecting the angular velocity ($\omega_i$) of each wheel and generating corresponding velocity signals or data,

processing these velocity signals or data in a processing unit (EPU) arranged to calculate the difference between the sum of the signals or data relating to one pair of diagonally-opposed wheels (1, 4) and the sum of the velocity signals or data relating to the other pair of wheels (2, 3), and to generate an alarm signal indicative of the fact that a tyre is at least partially deflated when the difference exceeds a predetermined reference value,

the method being characterized in that, before the difference is calculated, the velocity signals or data ($\omega_i$) are modified according to predetermined calibration factors ($K_i$) which are specific to each wheel (1-4) and are updated and stored periodically,

the calibration factors ($K_i$) being determined each time in predetermined running conditions, by the detection of the angular velocity ($\omega_i$) of each wheel (1-4), the calculation in the unit (EPU) of the value of the average velocity ($\omega_{ave}$) of the four wheels (1-4), and the adoption, as the calibration factor ($K_i$) for each wheel (1-4), of the ratio between the average velocity ($\omega_{ave}$) and the detected velocity ($\omega_i$) of the wheel (1-4),

the difference then being calculated with the use of the velocity signals or data ($\Omega_i$) thus modified.

2. A method according to Claim 1, characterized in that the said calibration fators ($K_i$) are determined whilst the vehicle (V) is moving along an essentially straight path at a speed of advance within a predetermined range of values and whilst the absolute value of the average angular acceleration of the wheels (1-4) is less than a predetermined value.

3. A method according to Claim 2, characterized in that the calibration factors ($K_i$) are determined whilst the braking system of the motor vehicle (V) is not activated.

4. Equipment for detecting the presence of an at least partially deflated tyre in a motor vehicle (V) with four wheels (1-4) having respective tyres, comprising

velocity sensor means (S1-S4) for providing signals or data indicative of the angular velocity of each wheel (1-4), and

an electronic processing unit (EPU) connected to the sensor means (S1-S4) and arranged to calculate the difference between the sum of the velocity signals or data relating to one pair of diagonally-opposed wheels (1, 4) and the sum of the velocity signals or data relating to the other pair of wheels (2, 3), and to generate an alarm signal indicative of the fact that a tyre is at least partially deflated when the difference exceeds a predetermined reference value, the equipment being characterized in that the electronic processing unit (EPU) is arranged to modify the velocity signals or data ($\omega_i$) before the calculation of the difference, the modification being effected by means of predetermined calibration factors ($K_i$) which are specific to each wheel (1-4) and are updated and stored periodically, the unit (EPU) being arranged to determine the calibration factors ($K_i$) each time in predetermined running conditions of the motor vehicle (V) by the detection of the angular velocity ($\omega_i$) of each wheel (1-4), the calculation of the value of the average velocity ($\omega_{ave}$) of the four wheels (1-4) and the adoption, as the calibration factor ($K_i$) for each wheel (1-4), of the ratio between the average velocity ($\omega_{ave}$) and the detected velocity ($\omega_i$) of the wheel (1-4), the unit (EPU) then being arranged to calculate the difference with the use of the velocity signals or data ($\Omega_i$) thus modified.

5. Equipment according to Claim 4, characterized in that the electronic processing unit (EPU) is arranged to determine the calibration factors ($K_i$) whilst the vehicle (V) is moving along an essentially straight path at a speed of advance within a predetermined range of values and whilst the absolute value of the average acceleration of the wheels (1-4) is less than a predetermined value.

6. Equipment according to Claim 5, also characterized in that the electronic processing unit (EPU) is arranged to determine the calibration factors ($K_i$) whilst the braking system of the motor vehicle (V) is not activated.

European Patent
Office

**EUROPEAN SEARCH REPORT**

Application Number

EP 96 11 0134

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|----------|-------------------------------------------------------------------------------|-------------------|----------------------------------------------|
| X | EP-A-0 657 313 (SUMITOMO ELECTRIC INDUSTRIES ;SUMITOMO RUBBER IND (JP)) 14 June 1995<br>* claims 1,2; figure 2 *<br>--- | 1-6 | B60C23/06 |
| X | EP-A-0 656 268 (SUMITOMO ELECTRIC INDUSTRIES) 7 June 1995<br>* page 14, line 26 - page 15, line 4; figure 13 * | 1,2 | |
| A | * page 4, line 35 - line 56; figure 19 *<br>--- | 3 | |
| X | EP-A-0 497 120 (TELEFUNKEN ELECTRONIC GMBH) 5 August 1992<br>* claim 9; figure *<br>----- | 1,2 | |
| | | | TECHNICAL FIELDS SEARCHED (Int.Cl.6)<br><br>B60C |

The present search report has been drawn up for all claims

| Place of search | Date of completion of the search | Examiner |
|-----------------|----------------------------------|----------|
| THE HAGUE | 8 October 1996 | Hageman, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)